# EUROPÄISCHE PATENTSCHRIFT

(11) **EP 2 821 370 B1**
(45) Veröffentlichungstag und Bekanntmachung des Hinweises auf die Patenterteilung: **16.01.2019**
(21) Anmeldenummer: 14178185.6
(22) Anmeldetag: 28.05.2010
(51) Int. Cl.: C02F 1/50, C02F 103/00, C02F 1/68

(54) **Zufuhreinrichtung zur Zufuhr einer wässrigen Acroleinlösung zu einer Hauptballastwasserleitung für Schiffe**
Supply device for supplying an aqueous acrolein solution to a main ballast water conduit for ships
Dispositif d'acheminement d'une solution d'acroléine aqueuse vers une conduite principale d'eau de ballast pour bateaux

(30) Priorität: 29.05.2009 DE 102009023314; 29.05.2009 DE 202009007693 U; 29.05.2009 DE 202009007694 U; 29.05.2009 DE 202009007686 U
(43) Veröffentlichungstag der Anmeldung: 07.01.2015
(62) Teilanmeldung aus: 10728116.4
(73) Patentinhaber: Blum, Holger, 9053 Teufen (CH)
(72) Erfinder: Blum, Holger, 9053 Teufen (CH)
(74) Vertreter: Puschmann Borchert Bardehle Patentanwälte Partnerschaft mbB

(56) Entgegenhaltungen:
- DE-A1- 19 935 912
- DE-U1-202007 004 912
- GB-A- 1 200 215

## Beschreibung

Die Erfindung betrifft eine Zufuhreinrichtung zur Zufuhr einer wässrigen Acroleinlösung zu einer Hauptballastwasserleitung einer Ballastwassereinrichtung für Schiffe.

Es ist bereits bekannt, dass Ballastwasser auf Schiffen desinfiziert werden kann durch den Einsatz von Acrolein. Schon eine Zugabe von 5 bis 15 ppm Acrolein zum Ballastwasser können Bakterien, Algen, Zebra-Muscheln und anderen Organismen des Zooplanktons abgetötet und damit kann der Transfer von einem Hafen zum anderen sicher unterbunden werden. Der Vorteil des Acroleineinsatzes ist die Nachhaltigkeit insbesondere gegenüber Larven von Zebramuscheln, und die Tatsache, dass das Acrolein sich nach einigen Tagen von selbst abbaut, d.h. beim Ablassen des Ballastwassers im Zielhafen tritt keine erneute Belastung des Hafenbeckens durch dieses Biozid auf.

Diesen Vorteilen steht gegenüber, dass die Handhabung, der Transport und die Lagerung vom reinem Acrolein auf Schiffen nicht durchgeführt werden kann, weil Acrolein eine hochgiftige Flüssigkeit mit Tränengaswirkung darstellt und das Bordpersonal gezwungen wäre, die Handhabung dieses Biozids nur mit vollständiger ABC-Schutzbekleidung und unter Verwendung von Gasmasken durchzuführen.

Wässrige Lösungen von Acrolein sind nicht giftig und lassen sich sicher handhaben, jedoch beträgt die Haltbarkeit dieser Lösungen nur wenige Tage, so dass der Einsatz auf Schiffen wegen der logistischen Probleme unmöglich ist.

Aus DE-GM 20 2007 004 912 ist eine Vorrichtung bekannt, bei der das Ballastwasser mittels einer Druckerhöhungspumpe durch eine Wasserstrahlpumpe gepumpt wird und die Unterdruckzone der Wasserstrahlpumpe hydraulisch über ein Stellventil verbunden ist mit einem Reaktionsgefäß, welches außen angebrachte separate Zulauföffnungen für Acroleinacetal, Säure und Hydrolysewasser aufweist. In dem Reaktionsgefäß wird eine wässrige Acroleinlösung erzeugt, die in der Wasserstrahlpumpe dem Ballastwasser zugemischt wird, sodass die Organismen in dem Ballastwasser durch das Acrolein abgetötet werden. Bei der Vorrichtung nach DE-GM 20 2007 004 912 kann Acroleinacetal direkt eingesetzt werden, ohne dass eine Vormischung mit einem Lösungsmittel erforderlich ist. Das gleiche gilt für die als Katalysator eingesetzte Säure, die ohne vorherige Verdünnung mit Wasser in die Vorrichtung dosiert werden kann. Das Hydrolysewasser wird aus dem Bordwassernetz entnommen. Obwohl mit dieser Verrichtung die Probleme der Handhabung, des Transports und der Lagerung vom reinem Acrolein auf Schiffen gelöst werden, gibt es mit zunehmenden Durchsatzanforderungen Dimensionierungsprobleme insbesondere bei der Wasserstrahlpumpe und bei dem Reaktionsgefäß.

GB 1 200 215 A betrifft eine Anordnung zur Erzeugung einer Emulsion aus Kohlenwasserstoffen und Wasser. Teil der Anordnung ist eine Ringdüse mit einem Düsenring aufweist, der eine Vielzahl von über einen Innenumfang des Düsenrings verteile Düsenöffnungen aufweist. Die Mischung der Kohlenwasserstoffe und dem Wasser wird dadurch erreicht, dass die beiden Bestandteile der Emulsion über separate Zuleitungen an die Ringdüse zugeführt werden.

Es ist Aufgabe der Erfindung, eine im Aufbau einfache Zufuhreinrichtung bereit zu stellen, mit der Ballastwasser an Bord von Schiffen mit Acrolein behandelt werden kann, deren Einsatzfähigkeit auch bei großen Durchsatzmengen mit vertretbarem Bauaufwand und eine endgültige Durchmischung des Ballastwasserstroms mit der Acroleinlösung gewährleistet ist.

Zur Lösung dieser Aufgabe weist die erfindungsgemäße Zufuhreinrichtung zur Zufuhr einer wässrigen Acroleinlösung zu einer Hauptballastwasserleitung einer Ballastwassereinrichtung für Schiffe zur Behandlung des Ballastwassers mit Acrolein die Merkmale des Hauptanspruchs auf.

Durch die Ringdüse mit der Vielzahl von an ihrem Innenumfang angeordneten Düsenöffnungen kann die Acroleinlösung gleichzeitig um den gesamten Umfang des Hauptballastwasserstroms herum diesem Hauptballastwasserstrom zugeführt werden, so dass eine gleichmäßige Zufuhr von Acroleinlösung an dem Umfang des Hauptwasserstroms erfolgt, wodurch eine gleichmäßige und gute Durchmischung der Acroleinlösung mit dem Hauptballastwasserstrom ermöglicht wird. Eine gleichmäßige Durchmischung dieser beiden Ströme ist für die gewünschte Wirkung des Acroleins, nämlich die Abtötung der lebenden Organismen in dem Hauptballastwasserstrom, wesentlich.

Durch die Strömungs-Störeinrichtung wird in vorteilhafter Weise die endgültige Durchmischung zwischen der Acroleinlösungsströmung und der Hauptballastwasserströmung erreicht. Dass die Strömungs-Störeinrichtung separat von der Ringdüse ausgebildet ist, hat den Vorteil, dass die Strömungs-Störeinrichtung leicht zu ersetzen ist, wenn sie durch den Hauptballastwasserstrom beschädigt oder abgenutzt ist.

Die Ausbildung der Strömungs-Störeinrichtung als Mischblende ist eine konstruktiv einfache und sehr wirkungsvolle Lösung für die Strömungs-Störeinrichtung, die einerseits den Zweck einer Durchmischung der Acroleinlösungsströmung mit der Hauptballastwasserströmung gewährleistet und andererseits bei einem erforderlichen Austausch leicht zu handhaben ist.

Eine vorteilhafte Ausgestaltung der erfindungsgemäßen Zufuhreinrichtung ist dadurch gekennzeichnet, dass die Vielzahl der über den Innenumfang der Ringdüse verteilen Düsenöffnungen unter gleichen Abständen angeordnet sind, wobei sich eine in vorteilhafter Weise gleichmäßige Verteilung der Acroleinlösungsströmung in den Hauptballastwasserstrom ergibt.

Eine weitere vorteilhafte Ausgestaltung der erfindungsgemäßen Zufuhreinrichtung ist dadurch gekennzeichnet, dass der Innendurchmesser der Ringdüse an den Innenumfang der der Hauptballastwasserleitung des Hauptballastwasserstroms angepasst ist. Dabei ist vorteilhaft, dass die Hauptballastwasserströmung ungehindert vorbeiströmen kann, so dass sich keine Feststoffbestandteile des Hauptballastwasserstroms vor oder hinter der Ringdüse ansammeln können. Auch die Lebensdauer der Ringdüse wird dadurch erhöht.

Eine weitere vorteilhafte Ausgestaltung der erfindungsgemäßen Zufuhreinrichtung ist dadurch gekennzeichnet, dass die Strömungs-Störeinrichtung eine Mischblende mit einer Durchtrittsöffnung für den Hauptballastwasserstrom aufweist, wobei die Durchtrittsöffnung eine kleinere offene Fläche als die freie innere Querschnittsfläche der Hauptballastwasserleitung hat.

Eine weitere vorteilhafte Ausgestaltung der erfindungsgemäßen Zufuhreinrichtung ist dadurch gekennzeichnet, dass die Durchtrittsöffnung der Mischblende nicht kreisförmig ist. Die Mischfunktion der Mischblende wird durch den nicht kreisförmigen Querschnitt im Vergleich zu der Mischwirkung einer Mischblende mit einer runden Öffnung verbessert.

Ausführungsbeispiele der Erfindung werden an Hand der beigefügten Zeichnungen erläutert, in denen
- Fig. 1: schematisch eine gesamte Vorrichtung zur Behandlung von Ballastwasser zeigt,
- Fig. 2: schematisch eine Ringdüse der Zufuhreinrichtung in Seitenansicht zeigt,
- Fig. 3: schematisch die in eine Ballastwasserrohrleitung eingesetzte Ringdüse der Zufuhreinrichtung zusammen mit der Mischblende zeigt,
- Fig. 4: eine perspektivische Ansicht der Ringdüse der Zufuhreinrichtung mit einer tangential angesetzten Injektorleitung zeigt,
- Fig. 5: eine Vorderansicht der Mischblende MB mit quadratischer Durchtrittsöffnung zeigt, und
- Fig. 6: eine Schnittdarstellung einer Mischdüse zeigt.

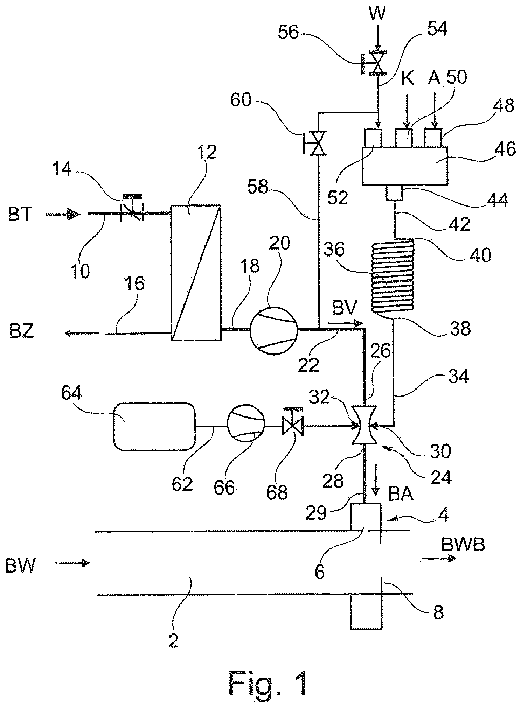

Fig.1 zeigt schematisch eine Vorrichtung zur Behandlung von Ballastwasser mit Acrolein, bei der die erfindungsgemäße Zufuhreinrichtung eingesetzt ist. Es ist zu beachten, dass die erfindungsgemäße Zufuhreinrichtung auch unabhängig von der in Fig. 1 gezeigten Gesamtanlage eingesetzt werden können.
Wie aus Fig.1 zu ersehen ist, fließt der Hauptballastwasserstrom (Volumen/Zeiteinheit) BW des mit Acrolein zu behandelnden Ballastwassers durch die Hauptballastwasserleitung 2 zu einer Zufuhreinrichtung, die eine Ringdüse 4 mit einem Düsenring aufweist, an dessen Innenseite wenigstens eine Düsenöffnung 6, vorzugsweise eine Vielzahl von unter gleichen Abständen angeordnete Düsenöffnungen 6, vorgesehen sind.

Ferner umfasst die Zufuhreinrichtung eine Strömungs-Störeinrichtung, die in Richtung des Hauptballastwasserstroms stromab von der Ringdüse 4 liegt. Die Strömungs-Störeinrichtung kann eine Verengung, eine Strömungsleiteinrichtung oder ein sonstiges Hindernis sein, wodurch der von der Ringdüse kommende Hauptballastwasserstrom verwirbelt und damit vermischt wird. Eine bevorzugte Form der Strömungs-Störeinrichtung ist eine in Fig. 1 gezeigt Mischblende 8, durch die das aus der Ringdüse 4 austretende Ballastwasser strömt. Durch die Mischblende 8 wird der freie Querschnitt der Hauptballastwasserleitung 2 verengt, und es wird ein hydraulischer Überdruck vor der Blende 8 erzeugt, der zu einer Turbulenz in der Ballastwasserströmung führt, die zu der schnellen und guten Durchmischung des Hauptballastwasserstroms BW mit einem mit Acrolein vorbehandelten Ballastwasser führt.

Durch die Düsenöffnungen 6 fließt gleichzeitig ein Strom (Volumen/Zeiteinheit) BA von mit Acrolein behandeltem Wasser radial nach innen und trifft auf den Hauptballastwasserstrom BW. Die vollständige momentane Vermischung des Hauptballastwasserstroms BW und des mit Acrolein vorbehandelten Wasserstroms BA mittels der Mischblende 8 liefert als Summe den Ballastwasserabfluss BWB.

Die Vorrichtung umfasst ferner eine Zweigleitung 10, die stromab von eine Ballastwasser-Speisepumpe (nicht gezeigt), durch die Ballastwasser in die Ballastwassertanks des Schiffes eingespeist wird, und stromauf von der Zufuhreinrichtung von der Hauptballastwasserleitung 2 abzweigt und durch die der Ballastwasser-Behandlungsvorrichtung ein Ballastwasser-Teilstrom BT zugeführt wird. Die Zweigleitung 10 führt zu einer Trenneinrichtung 12, die zur physikalischen Abtrennung des Schlammanteils bzw. von suspendierten Feststoffen des Ballastwasser-Teilstroms BT dient. Ein Regelventil 14 ist in der Zweigleitung 10 vorgesehen, um die Menge des in die Trenneinrichtung 12 eintretenden Ballastwasser-Teilstroms BT einzustellen. Ein in der Trenneinrichtung 12 abgetrennter Schlammwasserstrom BZ verlässt die Trenneinrichtung 12 über eine Austrittsleitung 16. Die Trenneinrichtung 12 führt eine physikalische Abtrennung von suspendierten Feststoffen aus dem Ballastwassers-Teilstrom BT mittels Zentrifugalkraft und/oder Filtration durch.

Der vermittels der Trenneinrichtung 12 vorher physikalisch gereinigte Ballastwasser-Teilstrom BV fließt durch eine Klarwasserleitung 18 zu einem Saugstutzen einer Druckerhöhungspumpe 20. Von der Druckerhöhungspumpe 20 führt eine Druckwasserleitung 22 zu einer Mischdüse 24, um den aus der Druckerhöhungspumpe 20 austretenden, vorher physikalisch gereinigten Wasser-Teilstrom BV einem Zuflussstutzen 26 der Mischdüse 24 zuzuführen, in welcher der Wasser-Teilstrom BV mit wässriger Acroleinlösung gemischt und so verdünnt wird, dass die Acroleinlösung über einen Zeitraum von einigen Tagen stabil bleibt bzw. dass sich das Acrolein in der Acroleinlösung nicht zersetzt.

Die Mischdüse 32 ist als Wasserstrahlpumpe mit einem Düsenbereich mit hydraulischem Unterdruck ausgebildet. Die Mischdüse 24 hat ferner einen Abflussstutzen 28, der über eine Leitung 29 mit der Ringdüse 4 verbunden ist, und zwei Vakuum-Stutzen 30, 32.

Die Leistung der Druckerhöhungspumpe 20 ist in Abhängigkeit von der Verengung des Einlasskonus der Mischdüse so dimensioniert ist, dass bei Nennleistung der Druckerhöhungspumpe in dem Bereich der Mischdüse zwischen dem Einlasskonus und dem Auslasskonus eine Wasser-Strömungsgeschwindigkeit von 20 bis 25 m/sec zu erreichen ist. Die Druckerhöhungspumpe 20 ist auf eine Leistung von 45 kW bei einem Durchsatz von 500 m³/h und einer Strömungsgeschwindigkeit von 2 bis 3 m/sec in einer Zuflussleitung und einer Abflussleitung der Druckerhöhungspumpe ausgelegt.

Die Mischdüse 24 hat ferner einen Abflussstutzen 28, der über eine Leitung 29 mit der Ringdüse 4 verbunden ist, und zwei Saugstutzen 30, 32. Die Druckerhöhungspumpe 20 ist so ausgelegt, dass über der Mischdüse 24, die als Wasserstrahlpumpe ausgebildet, eine Druckdifferenz von etwas 1 bis 1,5 bar zwischen dem Druck in dem Zuflussstutzen 26 der Mischdüse 24 und dem Druck in dem Abflussstutzen 28 der Mischdüse 24 erzeugt wird, sodass ein Unterdruckbereich in der Mischdüse entsteht, durch den die die Acroleinlösung angesaugt wird.

Das Volumen des Wasser-Teilstroms BV ist nahezu gleich der Differenz des von der Pumpe angesaugten Volumens des Wasser-Teilstroms BT minus dem Volumen des von der Trenneinrichtung 12 zur physikalischen Abtrennung von Feststoffen abgeschiedenen Schlammwasserstroms BZ.

Der eine Vakuum-Stutzen 30 ist über eine Leitung 34 mit einem Schlauchreaktor 36 verbunden, der einen Abflussstutzen 38 und einen Zuflussstutzen 40 aufweist. Der Zuflussstutzen 40 des Schlauchreaktors 36 ist über eine Leitung 42 mit einem Abflussstutzen 44 eines Generators 46 verbunden, der einen Akrolein-Zuflussstutzen 48, einen Spaltkatalysator-Zuflussstutzen 50 and einen Wasser-Zuflussstutzen 52 aufweist.

Über den Akrolein-Zuflussstutzen 48 wird dem Generator 46 in Abhängigkeit vom dem Volumen des Wasser-Teilstroms BT ein Volumenstrom A eines Acroleinderivates, beispielsweise Acroleinacetal, zugeführt. Über den Spaltkatalysator-Zuflussstutzen 50 wird dem Generator 46 in Abhängigkeit von dem Volumenstrom A ein Volumenstrom K eines Spaltkatalysators zugeführt. Über den Wasser-Zuflussstutzen 52 wird dem Generator 46 in Abhängigkeit vom Volumenstrom A ein Wasserstrom W zugeführt. In einer an den Wasser-Zuflussstutzen 52 angeschlossenen Leitung 54 ist ein Ventil 56 zur Steuerung des Wasserzuflusses vorgesehen.

Von dem Wasser-Zuflussstutzen 52 führt eine Zweigleitung 58 zu der Druckwasserleitung 22 und endet dort zwischen der Pumpe 20 und der Mischdüse 24. Wenn das Ventil 56 in der Leitung 54 geöffnet und das Ventil 60 in der Leitung 58 geschlossen ist, erfolgt die Wasserzufuhr von einer (nicht gezeigten) Reinwasserquelle. Alternativ kann der Generator 46 auch statt mit dem Wasserstrom W über die Leitung 58 mit einem Teilstrom des Wasser-Teilstroms BV betrieben werden. Dazu wird das Ventil 56 geschlossen und das Ventil 60 geöffnet.

Die im Generator 46 durch Zusammenwirken von Wasser W, Spaltkatalysator K und Acroleinderivat A erzeugte, wässrige Acroleinlösung strömt aus dem Abflussstutzen 44 des Generators 46 in den Zuflussstutzen 40 des Schlauchreaktors 36, wo die Reaktion der Reaktionsbestandteile zu Ende geführt wird. Von dem Abflussstutzen 38 des Schlauchreaktors 46 fließt die wässrige Acroleinlösung durch die Leitung 34 in den Vakuum-Stutzen 30 der Mischdüse 32.

In der Mischdüse 24 trifft der Volumenstrom der bei dem Vakuum-Stutzen 30 zugeführten wässrigen Acroleinlösung mit dem durch den Anschlussstutzen 26 zugeführten, vorher physikalisch gereinigten Wasser-Teilstrom BV zusammen.

Der in der Mischdüse 24 entstehende Acroleinhaltige Wasserstrom verlässt die Mischdüse 24 durch den Austrittsstutzen 28 und gelangt über die Leitung 29 in die Ringdüse 4, wo die Vermischung mit dem Hauptballastwasserstrom BW erfolgt.

Mit dem Vakuum-Stutzen 32 ist über eine Leitung 62 ein Tank 64 für Zersetzungsbeschleuniger verbunden. In der Leitung 62 sind eine Pumpe 66 und ein Absperrventil 68 in dieser Reihefolge zwischen dem Tank 64 und Vakuum-Stutzen 32 vorgesehen. Der Tank 64 ist durch die Leitung 63 mit dem Saugstutzen einer Pumpe 66 hydraulisch verbunden. An dem Druckstutzen der Pumpe 66 ist der Zuflussflansch des Absperrventils 68 angebracht. Der Abflussflansch des Absperrventils 68 ist mit dem Flansch des Vakuum-Stutzens 32 der Mischdüse 24 verbunden. Somit kann aus dem Tank 64 bei Bedarf mittels der Pumpe 66 über das Ventil 68 durch die Leitung 62 Zersetzungsbeschleuniger zu dem Vakuum - Stutzen 32 zudosiert werden.

Die Wasserversorgung für die Mischdüse 24 und den Generator 46 kann von einer separaten Wasserquelle, beispielsweise von einem Brauchwassertank des Schiffes erfolgen, der direkt mit der Druckerhöhungspumpe 20 verbunden ist.

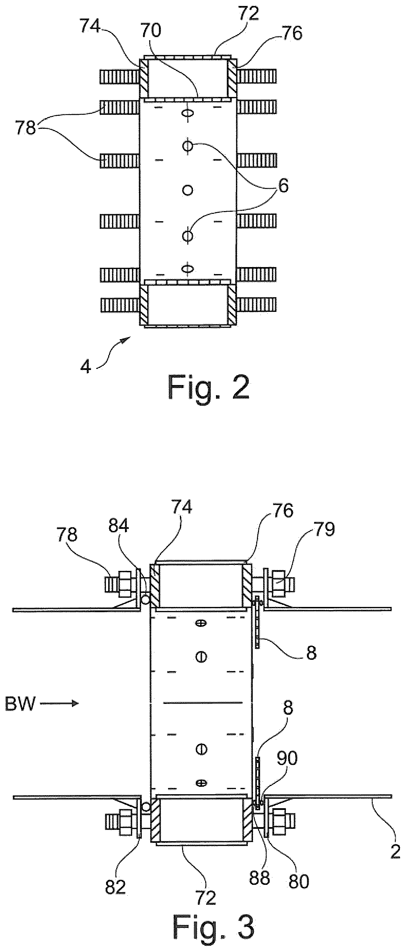

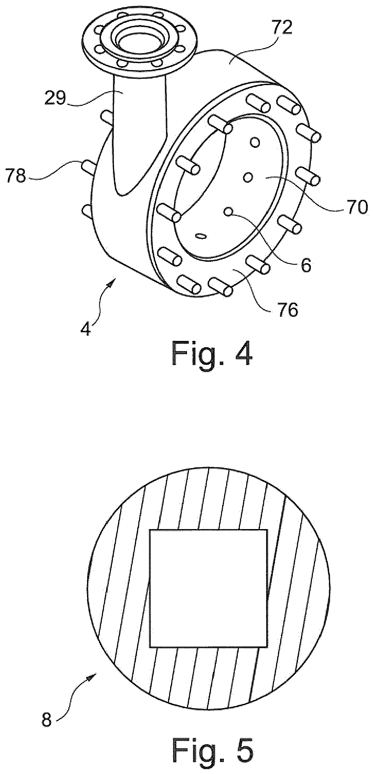

Wie aus Fig. 2 ersichtlich ist, besteht der Düsenring der Ringdüse 4 aus einem inneren Rohrabschnitt 70, der auf seinem Umfang mit mehreren Düsenöffnungen 6 versehen ist, sowie einem äußerem Rohrabschnitt 72 und zwei Flanschringen 74 und 76 gebildet ist. Die Flanschringe 74 und 76 sind zwischen dem inneren Rohrabschnitt 70 und dem äußeren Rohabschnitt 72 flüssigkeitsdicht eingeschweißt. In die Flanschringe 74 und 76 sind Stehbolzen 78 eingesetzt, die Gewinde haben, damit mit Hilfe von Muttern 79 (Fig. 4) ein leichter Einbau in bestehende Ballastwasserleitungen erfolgen kann.

Wie aus Fig. 3 ersichtlich ist, ist die Ringdüse 4 durch die Stehbolzen 78 und die Muttern 79 direkt an Anschlussflanschen 80, 82 der Hauptballastwasserleitung 2 so angeschlossen, dass die Mischblende 8 in Flussrichtung des Hauptballastwasserstroms BW hinter den Düsenöffnungen liegt. Zwischen der Ringdüse 4 und den Anschlussflanschen 80, 82 sind Flachdichtungen 84, 86 vorgesehen. Zwischen der Ringdüse 4 und dem Anschlussflansch 80 der Hauptballastwasserleitung 2 ist die Mischblende 8 angeordnet und über zwei Flachdichtungen 88, 90 abgedichtet. Die Mischblende 8 wird beim Anziehen der Muttern 79 an den Stehbolzen 78 einfach eingeklemmt. Somit ergibt sich ein einfacher Anschluss der Ringdüse 4 in die auf dem Schiff vorhandenen Ballastwasserleitungen.

Fig. 4 zeigt die perspektivische Darstellung der Ringdüse 4 und die am äußeren Rohrmantel 72 tangential angesetzte Leitung 29, die als Injektorleitung ausgebildet ist. Der Acroleinhaltigen Wasserstrom, der die Mischdüse 24 verlässt, steht unter einem Druck von etwa 1 bis 1,5 bar, sodass durch den von der Mischdüse 24 kommenden Acroleinhaltigen Strom, der unter Druck tangential über die Leitung 29 in den Düsenring der Ringdüse 4 eingeleitet oder injiziert wird, wobei eine Ringströmung erzeugt wird, die dafür sorgt, dass etwa die gleiche Menge an Acroleinlöung aus den einzelnen Düsenöffnungen 6 austritt. Damit erfolgt eine gleichmäßige Zufuhr von Acroleinlösung in den Hauptballastwasserstrom BW. Die stromab liegende Strömungs- Störeinrichtung sorgt dann für die Verwirbelung bzw. Vermischung der Acroleinlösung mit dem Hauptballastwasserstrom BW.

Der Fig. 5 zeigt als bevorzugte Form der Strömungs- Störeinrichtung die Mischblende 8, die mit einer nicht kreisförmigen sondern quadratischen Durchtrittsöffnung 92 versehen ist. Dadurch wird die Verwirbelung bzw. Vermischung der Acroleinlösung mit dem Hauptballastwasserstrom gegenüber einer Mischblende mit runder Öffnung weiter verbessert.

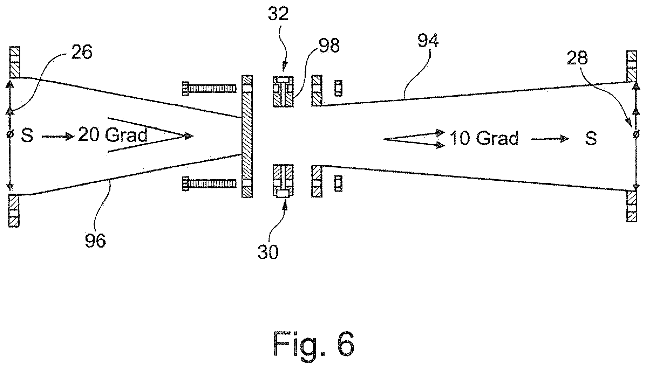

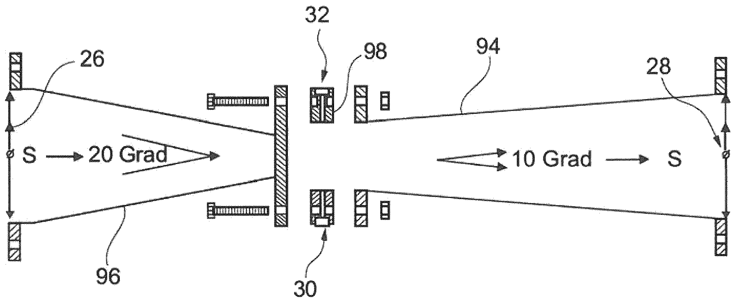

Figur 6 zeigt schematisch eine Mischdüse 24. Die Mischdüse 24 umfasst einen Auslasskonus 94 und einen Einlasskonus 96 sowie ein Zwischenstück 98, das zwischen einem Flansch 100 an dem Auslassende des Einlasskonus 96 und einen Flansch 102 am Eintrittsende des Austrittskonus 94 angeordnet ist. Die Flansche 100, 102 und das Zwischenstück 98 sind, wie in Figur 6 dargestellt ist, miteinander durch Schrauben 104 und Muttern 106 verschraubt. Der Einlasskonus 96 weist die Einlassmündung 26 für Ballastwasser auf, und der Auslasskonus 94 weist die Auslassöffnung 28 auf. Die Saugstutzen 30 und 32 in dem Zwischenstück 98 dienen zum Anschluss der Leitung 34 für Acroleinlösung bzw. der Leitung 62 für Zersetzungsbeschleuniger.

Wie in Figur 6 gezeigt ist, hat der Einlasskonus 96 einen Öffnungswinkel von 20°, und der Auslasskonus 94 hat einen Öffnungswinkel von 10°. Der Einlasskonus 96 der Mischdüse 24 hat ein Durchmesserverhältnis in Strömungsrichtung S von Einlass zu Auslass, das heißt eine Verengung des Durchtrittsquerschnitts, von etwa 2:1 und der Auslasskonus hat ein Durchmesserverhältnis in Strömungsrichtung S vom Einlass zum Auslass, das heißt eine Erweiterung der Durchtrittsfläche, von etwa 1:2. Der Durchmesser des Einlasskonus 96 an seinem Einlass 26 und der Durchmesser des Auslasskonus 94 an seinem Auslass 28 ist gleich groß wie der Durchmesser der angeschlossenen Rohrleitung für Ballastwasser. Wenn die Druckerhöhungspumpe 20 auf 45 kW ausgelegt ist, wird, wenn die Druckerhöhungspumpe 20 bei ihrer Nennleistung arbeitet, bei einem Durchschnitt von 500 m³/h und einer Strömungsgeschwindigkeit von 2 bis 3 m/sec die erforderliche Strömungsgeschwindigkeit von 20 bis 25 m/sec am Auslassende des Einlasskonus 96 erreicht.

Der Einlasskonus 94 ist über einen Flansch 98 mit der Zufuhrleitung 29 zu der Ringdüse 4 verbunden. Der Einlassstutzen 96 ist über einen Flansch 110 mit der Leitung 18 für die Zufuhr von Ballastwasser verbunden.

## Patentansprüche

1. Zufuhreinrichtung zur Zufuhr einer wässrigen Acroleinlösung zu einer Hauptballastwasserleitung (2) einer Ballastwassereinrichtung für Schiffe zur Behandlung des Ballastwassers mit Acrolein, wobei die Zufuhreinrichtung eine Ringdüse (4) aufweist, die zum Einsatz in die Hauptballastwasserleitung (2) ausgelegt ist, wobei die Ringdüse (4) einen Düsenring aufweist, der eine Vielzahl von über einen Innenumfang des Düsenrings verteile Düsenöffnungen (6) aufweist, **dadurch gekennzeichnet, dass**
die Zufuhreinrichtung weiterhin eine an der Ringdüse (4) angeordnete Strömungs-Störeinrichtung aufweist, die in Richtung eines in der Hauptballastwasserleitung (2) fließenden Hauptballastwasserstroms (BW) stromab von der Ringdüse (4) liegt, wobei die Strömungs-Störeinrichtung eine Mischblende (8) mit einer Durchtrittsöffnung (92) für den Hauptballastwasserstrom (BW) aufweist wobei die Durchtrittsöffnung (92) eine kleinere offene Fläche als die freie innere Querschnittsfläche der Hauptballastwasserleitung (2) hat.

2. Zufuhreinrichtung nach Anspruch 1, **dadurch gekennzeichnet, dass** die Vielzahl der über den Innenumfang der Ringdüse (4) verteilen Düsenöffnungen (6) unter gleichen Abständen angeordnet sind.

3. Zufuhreinrichtung nach Anspruch 1, **dadurch gekennzeichnet, dass** der Innendurchmesser der Ringdüse (4) an den Innenumfang der Hauptballastwasserleitung (2) angepasst ist.

4. Zufuhreinrichtung nach Anspruch 1 **dadurch gekennzeichnet, dass** die Durchtrittsöffnung der Mischblende (8) nicht kreisförmige ist.

## Claims

1. Feeder device for feeding aqueous acrolein solution to a main ballast water line (2) of an apparatus for treating ballast water for ships for treating ballast water with acrolein, wherein the feeder device comprises an annular nozzle (4) which is dimensioned for usage in the main ballast water line (2), wherein the annular nozzle (4) comprises a nozzle ring comprising a plurality of nozzle openings (6) distributed over the interior circumference of the nozzle ring, **characterized in that**
the feeding device additionally comprises a flow interfering device arranged at the ring nozzle (4) which stream interfering device is located downstream of the ring nozzle in direction of a main ballast water stream (BW) flowing in the main ballast water line (2), wherein the flow interfering device comprises a mixing face plate (8) having an opening (92) for the main ballast water stream (BW), wherein the opening (92) has a smaller opening area than the free inner cross section area of the main ballast water line (2).

2. Feeder device according to claim 1, **characterized in that** the plurality of the nozzle openings (6) distributed over the interior circumference of the ring nozzle (4) are arranged under equal distances.

3. Feeder device according to claim 1, **characterized in that** the interior diameter of the ring nozzle (4) is adapted to the interior circumference of the main ballast water line (2).

4. Feeder device according to claim 1, **characterized in that** the opening of the mixing face plate (8) is not circular.

## Revendications

1. Dispositif d'amenée destiné à amener une solution d'acroléine aqueuse à une conduite principale d'eaux de ballast (2) d'un dispositif à eaux de ballast destiné à des navires, pour le traitement des eaux de ballast à l'acroléine, le dispositif d'amenée présentant une buse annulaire (4), qui est conçue pour être insérée dans la conduite principale d'eaux de ballast (2), la buse annulaire (4) présentant une couronne de buses, qui comprend une pluralité d'ouvertures de buse (6) réparties sur une périphérie intérieure de la couronne de buses, **caractérisé en ce que**
le dispositif d'amenée comprend en outre un dispositif de perturbation d'écoulement agencé sur la buse annulaire (4), lequel se situe en aval de la buse annulaire (4) dans la direction d'un courant principal d'eaux de ballast (BW) s'écoulant dans la conduite principale d'eaux de ballast (2), le dispositif de perturbation d'écoulement comprenant un orifice mélangeur (8) pourvu d'une ouverture de passage (92) pour le courant principal d'eaux de ballast (BW), l'ouverture de passage (92) présentant une surface ouverte plus petite que la superficie de section transversale intérieure libre de la conduite principale d'eaux de ballast (2).

2. Dispositif d'amenée selon la revendication 1, **caractérisé en ce que** la pluralité des ouvertures de buse (6) réparties sur toute la périphérie intérieure de la buse annulaire (4) sont ménagées à équidistance.

3. Dispositif d'amenée selon la revendication 1, **caractérisé en ce que** le diamètre intérieur de la buse annulaire (4) est adapté à la périphérie intérieure de la conduite principale d'eaux de ballast (2).

4. Dispositif d'amenée selon la revendication 1, **caractérisé en ce que** l'ouverture de passage de l'orifice mélangeur (8) n'est pas circulaire.
